# EUROPÄISCHE PATENTSCHRIFT

(11) **EP 4 353 500 B1**
(45) Veröffentlichungstag und Bekanntmachung des Hinweises auf die Patenterteilung: **11.09.2024**
(21) Anmeldenummer: 22382967.2
(22) Anmeldetag: 11.10.2022
(51) Int. Cl.: B60G 9/00, B60G 11/113

(54) **STARRACHSE FÜR EIN KRAFTFAHRZEUG MIT EINEM FEDERSITZKÖRPER**
RIGID AXLE FOR A MOTOR VEHICLE COMPRISING A SPRING SEAT BODY
ESSIEU RIGIDE POUR UN VÉHICULE AUTOMOBILE DOTÉ D'UN CORPS DE SIÈGE À RESSORT

(43) Veröffentlichungstag der Anmeldung: 17.04.2024
(73) Patentinhaber: Autotech Engineering S.L., 48340 Amorebieta-Etxano (ES)
(72) Erfinder: Aso, Raymond, Shadforth County Durham DH6 1LL (GB)
(74) Vertreter: Cohausz & Florack

(56) Entgegenhaltungen:
- EP-A1- 0 188 133
- EP-A1- 0 278 596
- US-A- 1 396 044
- US-A- 3 804 467

## Beschreibung

Die Erfindung betrifft eine Starrachse für ein Kraftfahrzeug, insbesondere Nutzfahrzeug, mit einem Federsitzkörper, vorzugsweise mindestens zwei Federsitzkörpern, nach dem Oberbegriff des Anspruchs 1. Der Federsitzkörper kann auch als Blattfedersitzkörper bezeichnet werden.

Bei den hinteren Radaufhängungen von Lastkraftwagen oder Transportern für den Gütertransport weisen die typischen Radaufhängungssysteme eine hintere Starrachsen- oder Antriebsachsenaufhängung auf, um einen maximalen Stauraum im Laderaumbereich des betreffenden Kraftfahrzeugs zu gewährleisten. Unter einer Starrachse wird in diesem Kontext insbesondere eine feststehende Hinterachse ohne Antrieb verstanden. Starrachsen derartiger Radaufhängungssysteme werden jedoch auch als feststehende Antriebsachsen ausgeführt. Der Laderaum des Lastkraftwagens oder Transporters ist über Blattfedern auf der Starrachse bzw. feststehenden Antriebsachse abgestützt. Solche Achsen weisen normalerweise einen länglichen Hauptträger aus einem Stahlprofil oder, im Falle einer feststehenden Antriebsachse, ein längliches Stahlgussgehäuse auf. Zur Verbindung der Blattfedern mit der Achse sind Federsitzkörper vorgesehen, die auf dem länglichen Hauptträger bzw. Stahlgussgehäuse sitzen und mit diesem normalerweise durch eine Schweiß- oder Klemmverbindung verbunden sind. Die Schweißnaht ist dabei von oben betrachtet im Allgemeinen konkav oder gerade ausgeführt, um das Gewicht des Federsitzkörpers zu minimieren bzw. eine einfache Konstruktion des Federsitzkörpers sicherzustellen.

Derartige Federsitzkörper für Starrachsen von Kraftfahrzeugen sind in verschiedenen Ausführungen bekannt (siehe z. B. DE 100 36 651 A1 und DE 20 2016 008 401 U1).

Die Federsitzkörper, ihre Verbindung zu der Starrachse sowie der längliche Hauptträger bzw. das längliche Gehäuse der als Antriebsachse ausgeführten Starrachse sind insbesondere im Fahrbetrieb des beladenen Fahrzeugs hohen Belastungen unterworfen. Zur Sicherstellung einer zufriedenstellenden Robustheit, insbesondere Dauerfestigkeit, werden die Federsitzkörper sowie der Hauptträger bzw. das Antriebsachsengehäuse mit relativ hoher Material- bzw. Wanddicke ausgeführt. Dadurch besitzen herkömmliche Starrachsen der hier genannten Art jedoch ein entsprechend hohes Gesamtgewicht, was sich nachteilig auf den Kraftstoffverbrauch des betreffenden Fahrzeugs auswirkt.

Aus der US 1 396 044 A, die den Oberbegriff des Anspruchs 1 zeigt, ist eine Fahrzeugfederaufhängung bekannt, die in Kombination mit einem Achsgehäuse eine Feder, ein auf dem Achsgehäuse angeordnetes Federgehäuse mit einer Federauflagefläche und damit einstückig verbundene Seitenwände aufweist, wobei zwischen den Seitenwänden Blattfedern angeordnet sind. Die Seitenwände des Federgehäuses sind mit Schultern versehen, wobei die Feder zu den Schultern in den Seitenwänden komplementäre Schultern aufweist. Zudem umfasst diese Fahrzeugfederaufhängung eine Kappe zum Festhalten der Feder in ihrer Position und Mittel zum Festhalten der Kappe in engem Kontakt mit der Feder. Das

Federgehäuse hat einen Bodenabschnitt, der eine obere Federsitzfläche aufweist. Die oberen, nach unten gekrümmten Flächenabschnitte des Bodenabschnitts kommen mit der gekrümmten Blattfeder nicht in Kontakt und stellen somit keine Federsitzfläche dar. Die EP 0 188 133 A lehrt eine Blattfeder-Klemmanordnung mit einem Keil-Einsatz, der aus gummielastischem Material gefertigt ist und nicht unmittelbar mit der Starrachse verbunden, insbesondere nicht mit der Starrachse verschweißt ist.

Die EP 0 278 596 A zeigt eine Blattfeder-Klemme mit Befestigungsmittel. Die Blattfeder-Klemme umfasst eine Klemmplatte, die seitliche vorstehende, trapezförmige Flanschabschnitte aufweist und mit einer in der EP 0 278 596 A nicht gezeigten Starrachse verschweißt werden kann.

Die US 3 804 467 A zeigt eine als Starrachse ausgeführte Vorderachse mit einer Federplatte, die in einer Ausführungsform seitlich vorstehende Plattenabschnitte aufweist, deren nach unten gebogene Endabschnitte mit der Starrachse verschweißt sind.

Der vorliegenden Erfindung lag die Aufgabe zugrunde, einen Federsitzkörper der eingangs genannten Art dahingehend zu verbessern, dass er eine verbesserte Robustheit, insbesondere erhöhte Dauerfestigkeit in seiner Verbindung mit einer gattungsgemäßen Starrachse bietet und dadurch eine Reduzierung des Gesamtgewichts der Starrachse ermöglicht.

Diese Aufgabe wird durch eine Starrachse mit einem Federsitzkörper mit den in Anspruch 1 angegebenen Merkmalen gelöst. Vorteilhafte Ausgestaltungen der erfindungsgemäßen Starrachse sind in den von Anspruch 1 abhängigen Unteransprüchen angegeben.

Die erfindungsgemäße Starrachse für ein Fahrzeug umfasst einen an der Starrachse befestigten Federsitzkörper, wobei der Federsitzkörper eine obere Federsitzfläche, eine untere Aufsitzfläche, seitliche Kantenflächen, welche zwischen der Federsitzfläche und der Aufsitzfläche liegen, und Haltemittel zum Halten von Spannmitteln zur Befestigung mindestens einer Feder an dem Federsitzkörper aufweist, wobei die seitlichen Kantenflächen eine erste Kantenfläche und eine zweite Kantenfläche umfassen, die zueinander abgewandt sind und im befestigten Zustand des Federsitzkörpers auf der Starrachse quer zu der Starrachse verlaufen, wobei die erste Kantenfläche im befestigten Zustand des Federsitzkörpers auf der Starrachse näher an einem Ende der Starrachse, das geeignet ist, ein Fahrzeugrad zu tragen, liegt als die zweite Kantenfläche, wobei die erste Kantenfläche einen Kantenverlauf aufweist, der im befestigten Zustand des Federsitzkörpers auf der Starrachse in Überdeckung zu der Starrachse liegt, und wobei der Federsitzkörper mit der Starrachse verschweißt ist. Die erfindungsgemäße Starrachse ist dadurch gekennzeichnet, dass der Federsitzkörper als Schmiedeteil ausgeführt ist, und dass besagter Kantenverlauf von oben betrachtet zumindest teilweise als nach außen vorstehender, konvexer Kantenverlauf ausgebildet ist, dessen Spitze oder Scheitelpunkt in einem Bereich der ersten Kantenfläche liegt, der entlang eines mittleren, quer zu der Starrachse verlaufenden Längenbereichs der oberen Federsitzfläche verläuft, wobei besagter mittlerer Längenbereich weniger als ein Drittel, vorzugsweise weniger als ein Viertel, besonders bevorzugt weniger als ein Fünftel der Länge der oberen Federsitzfläche beträgt, und wobei der Federsitzkörper mit der Starrachse verschweißt ist, indem eine oder mehrere Schweißnähte zumindest teilweise entlang des nach außen vorstehenden, konvexen Kantenverlaufs der ersten Kantenfläche ausgebildet ist/sind.

Unter einem konvexen Kantenverlauf wird im vorliegenden Kontext ein Kantenverlauf verstanden, der eine nach außen gewölbte Kontur aufweist. Unter einem konkaven Kantenverlauf wird dagegen ein Kantenverlauf verstanden, der eine nach innen gewölbte Kontur aufweist.

Der nach außen vorstehende, konvexe Kantenverlauf der besagten seitlichen Kantenfläche verbessert die Haltbarkeit der Verbindung zwischen Federsitzkörper und Starrachse, wobei die Verbindung als Schweißverbindung, beispielsweise in Form einer oder mehrerer Schweißnähte ausgeführt ist. Der nach außen vorstehende, konvexe Kanten- bzw. Schweißnahtverlauf verursacht zwar eine geringe Massenzunahme des Federsitzkörpers, bietet jedoch eine sehr masseneffiziente Verbesserung der Robustheit des Federsitzkörpers. Diese mit dem nach außen vorstehenden, konvexen Kantenverlauf der besagten seitlichen Kantenfläche einhergehende Massenzunahme lässt sich durch die große potenzielle Masseeinsparung ausgleichen, die sich bei anderen Teilen der Starrachse verwirklichen lässt, beispielsweise bei einem axialen, vorzugsweise rohrförmigen Hauptträger der Starrachse.

In seitens des Erfinders durchgeführten Vergleichsuntersuchungen wurde gefunden, dass die Dauerfestigkeit einer Schweißverbindung zwischen einem erfindungsgemäßen Federsitzkörper und einem rohrförmigen Stahlhauptträger einer Starrachse, wobei der Federsitzkörper konvexe Kantenflächen aufweist und dementsprechend durch mindestens eine konvexe Schweißnaht mit dem Stahlhauptträger verbunden ist, erheblich höher liegt als die Dauerfestigkeit einer Schweißverbindung zwischen einem herkömmlichen Federsitzkörper und einem entsprechenden rohrförmigen Stahlhauptträger einer gleichen Starrachse, wobei der herkömmliche Federsitzkörper konkave Kantenflächen aufweist und dementsprechend durch eine konkave Schweißnaht mit dem Stahlhauptträger verbunden ist. Die Verbesserung bzw. Steigerung der Dauerfestigkeit der Schweißverbindung betrug bei der konvexen Schweißnaht beispielsweise ca. 78 %. Diese Verbesserung kann durch eine noch stärkere Akzentuierung der konvexen Form der betreffenden Kantenfläche und damit der Schweißnaht weiter erhöht werden, da die Dauerfestigkeit in erster Linie durch die Kraft aus der Belastung der Radmitte bestimmt wird. Durch Verwendung einer konvexen Form des Kantenverlaufs wird der Abstand zum Kraftangriffspunkt verringert und somit die Biegespannung an der betreffenden Schweißnaht reduziert.

Eine Verbesserung der Dauerfestigkeit der Schweißnaht um ca. 78 % bedeutet eine Verringerung der Spannung in der Wärmeeinflusszone der Schweißnaht um etwa 10 %. Aufgrund der Beziehung σ = F/A kann somit die Wanddicke des rohrförmigen Hauptträgers um bis zu ca. 10 % reduziert werden, was bei den oben erwähnten Vergleichsuntersuchungen eine Gewichtseinsparung von ca. 10 % bzw. 1,63 kg ergab.

Eine vorteilhafte Ausgestaltung der erfindungsgemäßen Starrachse sieht vor, dass die zweite Kantenfläche einen Kantenverlauf aufweist, der im befestigten Zustand des Federsitzkörpers auf der Starrachse in Überdeckung zu der Starrachse liegt, wobei dieser Kantenverlauf der zweiten Kantenfläche von oben betrachtet zumindest teilweise als nach außen vorstehender, vorzugsweise konvexer Kantenverlauf ausgebildet ist, dessen Spitze oder Scheitelpunkt in einem Bereich der zweiten Kantenfläche liegt, der entlang eines mittleren, quer zu der Starrachse verlaufenden Längenbereichs der oberen Federsitzfläche verläuft, wobei besagter mittlerer Längenbereich weniger als ein Drittel, vorzugsweise weniger als ein Viertel, besonders bevorzugt weniger als ein Fünftel der Länge der oberen Federsitzfläche beträgt, und wobei der Federsitzkörper mit der Starrachse verschweißt ist, indem eine oder mehrere Schweißnähte zumindest teilweise entlang des nach außen vorstehenden, vorzugsweise konvexen Kantenverlaufs der zweiten Kantenfläche ausgebildet ist/sind. Anders ausgedrückt weist die zweite Kantenfläche des Federsitzkörpers einen Kantenverlauf auf, der vorzugsweise dem erfindungsgemäßen Kantenverlauf der ersten Kantenfläche entspricht. Hierdurch bietet der erfindungsgemäße Federsitzkörper eine noch weiter verbesserte Robustheit, insbesondere erhöhte Dauerfestigkeit in seiner Verbindung mit einer gattungsgemäßen Starrachse und ermöglicht dadurch eine weitere Reduzierung des Gesamtgewichts der Starrachse.

Der Federsitzkörper der erfindungsgemäßen Starrachse ist als Schmiedeteil, vorzugsweise als Schmiedestahlteil ausgeführt. Das Schmieden ist im Vergleich zum Metallgießen ein relativ schnelles Bearbeitungsverfahren. Metallteile mit komplexen Formen und Konturen lassen sich durch Metallgießen zwar einfacher herstellen als durch Schmieden, das insoweit gewisse Grenzen hat. Jedoch erfordert der erfindungsgemäße Federsitzkörper keine besonders komplexe Form und Kontur, so dass er vorteilhaft durch Schmieden hergestellt werden kann. Als Schmiedeteil hat der erfindungsgemäße Federsitzkörper gegenüber einem entsprechenden Gussteil den Vorteil einer deutlichen höheren Festigkeit und Homogenität des Materials. Das Auftreten von Porosität, Schrumpfung und Hohlräumen, was bei Metallgussteilen häufig festzustellen ist, ist bei einem Schmiedeteil grundsätzlich ausgeschlossen. Der erfindungsgemäße Federsitzkörper ist daher mechanisch robuster als ein entsprechend geformter Federsitzkörper, der durch Metallgießen hergestellt ist. Der erfindungsgemäße Federsitzkörper lässt sich aus vergleichsweise kostengünstigem Schmiedestahl herstellen. Beim Schmieden ist vielfach keine teure Stahllegierung erforderlich, um ein hochfestes Bauteil zu erhalten.

Nach einer weiteren vorteilhaften Ausgestaltung der erfindungsgemäßen Starrachse weisen die erste Kantenfläche und/oder die zweite Kantenfläche des Federsitzkörpers entlang ihrer mit der Starrachse nicht in Überdeckung liegenden Abschnitte von oben betrachtet jeweils einen hohlkehlförmigen, vorzugsweise konkaven Kantenverlauf auf. Diese Ausgestaltung begrenzt die Gewichtszunahme des erfindungsgemäßen Federsitzkörpers gegenüber einem herkömmlichen Federsitzkörper, der ausschließlich einen konkaven Kantenverlauf entlang seines mit der Starrachse in Überdeckung liegenden Abschnitts aufweist, und bewirkt dabei weiterhin eine verbesserte Robustheit, insbesondere erhöhte Dauerfestigkeit des Federsitzkörpers in seiner Verbindung mit einer gattungsgemäßen Starrachse und ermöglicht dadurch die oben angesprochene Reduzierung des Gesamtgewichts der Starrachse.

Eine weitere vorteilhafte Ausgestaltung der erfindungsgemäßen Starrachse ist dadurch gekennzeichnet, dass der nach außen vorstehende, konvexe Kantenverlauf des Federsitzkörpers nicht oder nur geringfügig, beispielsweise nicht mehr als 10 mm, über eine Tangente hinaus vorsteht, welche die nicht in Überdeckung mit der Starrachse liegenden Abschnitte der ersten oder zweiten Kantenfläche berührt. Diese Ausgestaltung zeichnet sich durch eine sehr gute Verbesserung der Dauerfestigkeit des Federsitzkörpers in seiner Verbindung mit einer gattungsgemäßen Starrachse aus und ermöglicht eine besonders weitgehende Reduzierung des Gesamtgewichts der Starrachse.

Nach einer weiteren vorteilhaften Ausgestaltung der erfindungsgemäßen Starrachse ist in der Aufsitzfläche des Federsitzkörpers mindestens eine Aussparung ausgebildet, die an dem besagten Kantenverlauf der ersten Kantenfläche mündet, vorzugsweise im Wesentlichen mittig an dem besagten Kantenverlauf der ersten Kantenfläche mündet. Durch die Aussparung, die beispielsweise in Form einer Nut, vorzugsweise einer Nut mit bogenförmigem Querschnittsprofil ausgebildet ist, kann beim Verschweißen des Federsitzkörpers mit der Starrachse die Wärmeeinbringung insbesondere in den Federsitzkörper und dadurch ein Verzug bzw. Eigenspannungen des Federsitzkörpers reduziert werden. Alternativ oder zusätzlich ist in der Aufsitzfläche auch eine Aussparung ausgebildet ist, die an dem Kantenverlauf der zweiten Kantenfläche mündet, vorzugsweise im Wesentlichen mittig an diesem Kantenverlauf der zweiten Kantenfläche mündet, wobei dieser Kantenverlauf im befestigten Zustand des Federsitzkörpers auf der Starrachse in Überdeckung zu der Starrachse liegt. Auch diese Aussparung ist beispielsweise in Form einer Nut, vorzugsweise einer Nut mit bogenförmigem Querschnittsprofil ausgebildet. Sie bietet den gleichen technischen Vorteil wie die mindestens eine Aussparung, die an dem besagten Kantenverlauf der ersten Kantenfläche mündet.

Nach einer weiteren bevorzugten Ausgestaltung der erfindungsgemäßen Starrachse sind die Federsitzfläche des Federsitzkörpers und die Haltemittel zum Halten von Spannmitteln zur Befestigung mindestens einer Blattfeder ausgebildet.

Eine erfindungsgemäße Starrachse für ein Kraftfahrzeug, insbesondere Nutzfahrzeug, ist mit einem, vorzugsweise mit mindestens zwei erfindungsgemäßen Federsitzkörpern versehen, die entsprechend einer oder mehreren der oben angegebenen Ausgestaltungen ausgeführt sind. Dabei ergeben sich die oben in Bezug auf den erfindungsgemäßen Federsitzkörper genannten Vorteile.

Erfindungsgemäß ist der Federsitzkörper mit der Starrachse durch Schweißnähte verbunden. Hierdurch lässt sich jeweils auf kostengünstige Weise eine besonders robuste Verbindung zwischen Starrachse und Federsitzkörper erzielen.

Eine weitere vorteilhafte Ausgestaltung der Erfindung ist dadurch gekennzeichnet, dass die Starrachse eine abgeflachte oder im Wesentlichen ebene Verbindungsfläche aufweist, an welcher der Federsitzkörper mit der Starrachse verbunden ist. Die abgeflachte oder im Wesentlichen ebene Verbindungsfläche der Starrachse unterstützt bzw. bewirkt eine drehfeste Anbindung des erfindungsgemäßen Federsitzkörpers an der Starrachse. Die stoffschlüssige Verbindung zwischen Federsitzkörper und Starrachse wird dadurch entlastet bzw. kann entsprechend kleiner dimensioniert werden. Zudem erhält die Starrachse durch die abgeflachte oder im Wesentlichen ebene Verbindungsfläche ein Querschnittsprofil, vorzugsweise geschlossenes Hohlprofil, mit dem sich im Vergleich zu anderen Vollprofilen bzw. geschlossenen Hohlprofilen gleicher Querabmessung und Wandstärke eine relativ hohe Biegefestigkeit sowie Torsionssteifigkeit der Starrachse erzielen lässt.

Nach einer weiteren Ausgestaltung der Erfindung weist die Starrachse in ihrem Bereich, an welchem der Federsitzkörper mit der Starrachse verbunden ist, ein Querschnittsprofil auf, das mindestens zwei zueinander parallele Außenseiten, vorzugsweise zwei Paare zueinander paralleler Außenseiten, umfasst. Besonders bevorzugt weist die erfindungsmäße Starrachse dabei ein im Wesentlichen rechteckiges oder quadratisches Hohlprofil mit abgerundeten Kanten auf. Mit einem entsprechenden Profil, vorzugsweise geschlossenen Hohlprofil, lässt sich im Vergleich zu einem kreisrunden, geschlossenen Hohlprofil gleicher Querabmessung und Wanddicke eine relativ hohe Biegefestigkeit sowie Torsionssteifigkeit der Starrachse erzielen.

Erfindungsgemäß ist der Federsitzkörper mit der Starrachse verschweißt, indem eine oder mehrere Schweißnähte zumindest teilweise entlang des nach außen vorstehenden, konvexen Kantenverlaufs der ersten Kantenfläche ausgebildet ist/sind. Des Weiteren kann der Federsitzkörper mit der Starrachse verschweißt sein, indem eine oder mehrere Schweißnähte zumindest teilweise entlang des nach außen vorstehenden, vorzugsweise konvexen Kantenverlaufs der zweiten Kantenfläche ausgebildet ist/sind. Hierdurch lässt sich eine sehr zuverlässige stoffschlüssige Anbindung des Federsitzkörpers an der Starrachse verwirklichen.

Nach einer weiteren vorteilhaften Ausgestaltung der erfindungsgemäßen Starrachse sind die Schweißnähte zur Verbindung des erfindungsgemäßen Federsitzkörpers mit der Starrachse im Wesentlichen symmetrisch angeordnet. Hierdurch können Eigenspannungen in dem Federsitzkörper, die durch Wärmeeinbringung beim Schweißen verursacht werden, reduziert werden. Vorzugsweise sind die Schweißnähte zur Verbindung des erfindungsgemäßen Federsitzkörpers mit der Starrachse teilweise oder vollständig in Form von Kehlnähten ausgebildet.

Die erfindungsgemäße Starrachse ist vorzugsweise als nicht angetriebene Starrachse ausgeführt, wobei sie vorzugsweise aus einem Achsrohr oder Rohrprofil gebildet ist. Bei dieser Ausführung sind die oben genannten Vorteile der Erfindung, insbesondere die potenzielle prozentuale Gewichtseinsparung der Starrachse, signifikant. Es liegt allerdings auch im Rahmen der Erfindung, dass die erfindungsgemäße Starrachse als Antriebsachse ausgeführt wird, wobei sie dann insbesondere oder im Wesentlichen aus einem Achsgehäuse gebildet ist.

Eine weitere vorteilhafte Ausgestaltung der Erfindung ist dadurch gekennzeichnet, dass an den Enden der Starrachse Radträger befestigt sind, die jeweils mittels einer Verstrebung, vorzugsweise einer im Wesentlichen dreieckigen Hohlkörperstrebe, an der Starrachse abgestützt sind, wobei die Verstrebung auf der gleichen Seite wie der jeweilige Federsitzkörper auf der Starrachse mit Abstand von dem Federsitzkörper angeordnet ist. Diese Ausgestaltung ist günstig für die Leichtbauweise bzw. Gewichtsreduzierung der Starrachse. Denn durch die Verstrebung können die Radträger und die Starrachse bei gleicher oder sogar verbesserter mechanischer Festigkeit, insbesondere Biege- sowie Torsionsfestigkeit, mit reduzierter Materialdicke verwirklicht werden. Die Verstrebung ist hierzu vorzugsweise mit dem jeweiligen Radträger und einem axialen Hauptträger der Starrachse verschweißt.

Nachfolgend wird die Erfindung anhand einer mehrere Ausführungsbeispiele darstellenden Zeichnung näher erläutert. Es zeigen:
- Fig. 1: eine erfindungsgemäße Starrachse für ein Kraftfahrzeug, insbesondere Nutzfahrzeug, mit daran befestigten Federsitzkörpern, in einer perspektivischen Darstellung;
- Fig. 2: eine vergrößerte Ansicht eines Abschnitts (Details II) der in Fig. 1 gezeigten Starrachse;
- Fig. 3: den in Fig. 2 gezeigten Abschnitt der Starrachse in Draufsicht;
- Fig. 4: den in Fig. 2 gezeigten Abschnitt der Starrachse in einer perspektivischen Unteransicht;
- Fig. 5a: einen erfindungsgemäßen Federsitzkörper in einer perspektivischen Unteransicht;
- Fig. 5b: den in Fig. 5a gezeigten Federsitzkörper in einer weiteren perspektivischen Ansicht;
- Fig. 5c: den in Fig. 5a gezeigten Federsitzkörper in Unteransicht; und

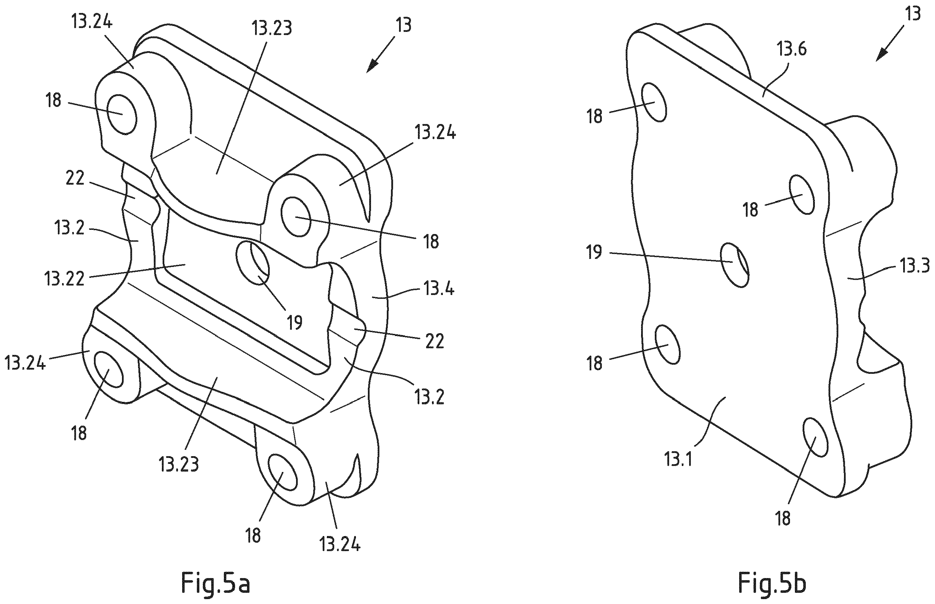

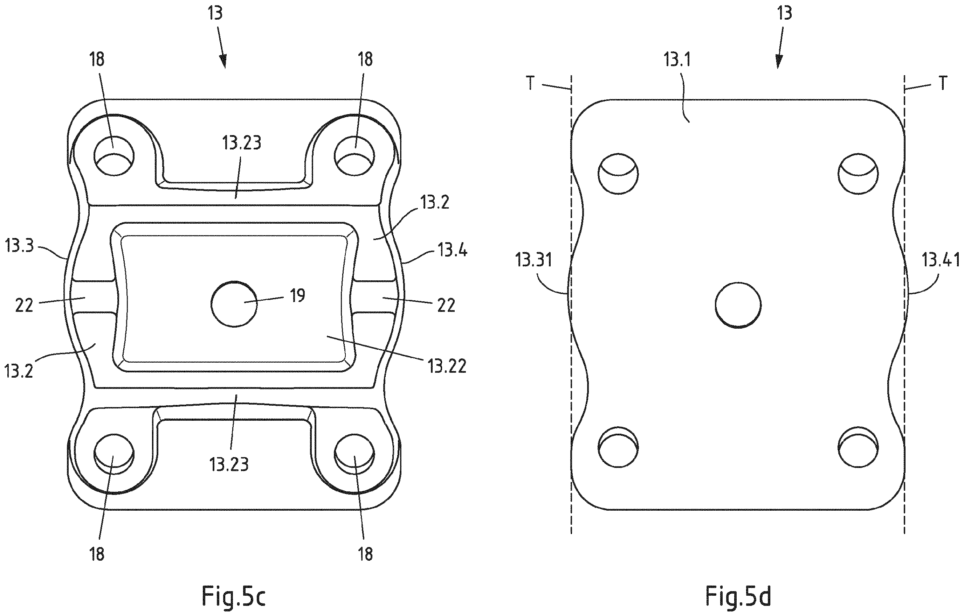

- Fig. 5b: den in Fig. 5a gezeigten Federsitzkörper in Draufsicht.

Die in der Zeichnung gezeigte erfindungsgemäße Starrachse 1 ist für ein Kraftfahrzeug, insbesondere Nutzfahrzeug, beispielsweise einen Lieferwagen, Kleinbus oder Kleintransporter bestimmt. Die Starrachse 1 ist vorzugsweise als nicht angetriebene Starrachse ausgeführt. Sie weist eine abgeflachte oder im Wesentlichen ebene Oberseite 3.1 auf, die als Verbindungsfläche dient. Die Starrachse 1 ist beispielsweise aus einem Rohr 3 gefertigt, welches ein geschlossenes, im Wesentlichen rechteckiges oder quadratisches Hohlprofil mit abgerundeten Kanten aufweist. Das Rohr 3 kann auch als Achsrohr oder axialer Hauptträger bezeichnet werden. Es ist vorzugsweise aus Stahl gefertigt.

An den Enden der Starrachse 1 sind Radträger 4, 4' angeordnet, die mit dem Rohr (axialen Hauptträger) 3 durch Schweißnähte verbunden sind. Die Radträger 4, 4' können als Metallgussteil oder Schmiedestahlteil ausgeführt sein. Sie weisen jeweils einen Verbindungsabschnitt 4.1 auf, der über die Außenflächen des Hauptträgers 3 vorsteht. Das jeweilige Ende des Hauptträgers 3 und der daran angebrachte Radträger 4 oder 4' definieren eine umlaufende Kehle. Dementsprechend ist die dortige Schweißnaht 5 als Kehlnaht, beispielsweise als umlaufende Kehlnaht ausgeführt.

An dem mit dem Hauptträger 3 verschweißten Verbindungsabschnitt 4.1 des Radträgers 4, 4' schließt sich ein Befestigungsabschnitt 4.2 an, der gegenüber der Oberseite 3.1 des Hauptträgers 3 nach oben vorsteht. An dem Befestigungsabschnitt 4.2 ist ein eine Radnabe bzw. einen Achszapfen aufweisendes Radlager (nicht gezeigt) lösbar montierbar. Hierzu hat der Befestigungsabschnitt 4.2 mehrere Gewindebohrungen und/oder Durchgangslöcher 6 zur Aufnahme von Befestigungsschrauben (nicht gezeigt). Der Verbindungsabschnitt 4.1 und der Befestigungsabschnitt 4.2 sind zusammen als einstückiges Bauteil ausgebildet.

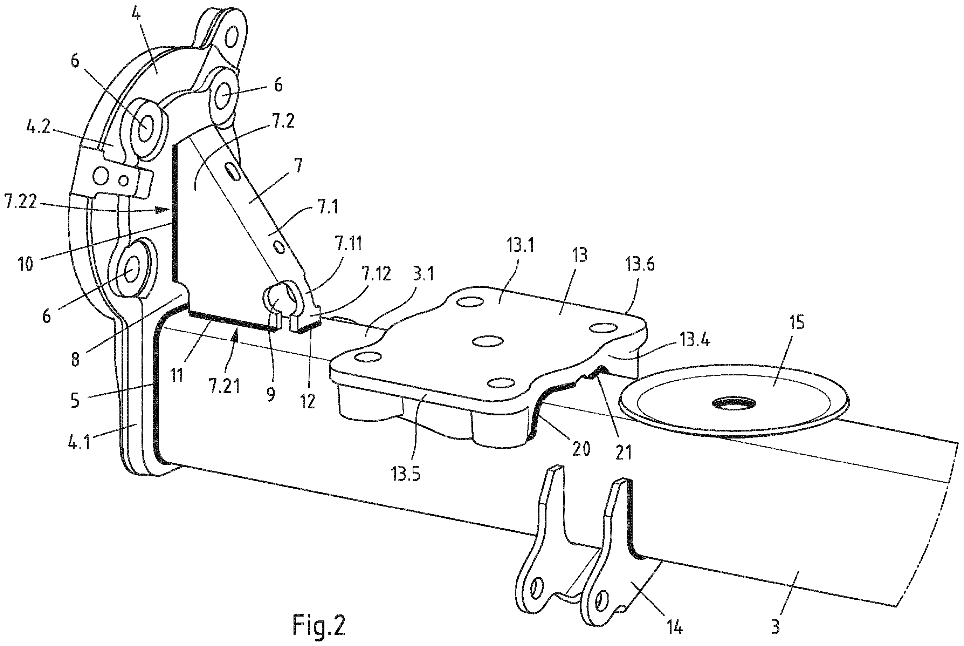

Der Radträger 4 bzw. dessen Befestigungsabschnitt 4.2 ist mittels einer Verstrebung 7 an der Starrachse 1 abgestützt. Der Verstrebung 7 ist beispielsweise in Form einer im Wesentlichen dreieckigen Hohlkörperstrebe ausgeführt. Die Hohlkörperstrebe 7 besteht vorzugsweise aus einem Blechformteil. Sie hat einen Rücken 7.1, der zwei parallel zueinander verlaufende Schenkel 7.2 verbindet, die jeweils zwei rechtwinklig zueinander verlaufende Kanten 7.21, 7.22 aufweisen. Die untere Kante 7.21 ist mit der Oberseite 3.1 des Hauptträgers 3 stoffschlüssig verbunden, vorzugsweise verschweißt, während die andere oder vertikal verlaufende Kante 7.22 mit dem Befestigungsabschnitt 4.2 des Radträgers 4 stoffschlüssig verbunden, vorzugsweise verschweißt ist. Des Weiteren ist das untere Ende des Rückens 7.1 der mit der Oberseite 3.1 des Hauptträgers 3 stoffschlüssig verbunden, vorzugsweise verschweißt. Das obere Ende des Rückens 7.1 endet mit Abstand zu dem Befestigungsabschnitt 4.2 des Radträgers 4. Die rechtwinklig zueinander verlaufenden Kanten 7.21, 7.22 des jeweiligen Schenkels 7.2 sind mit einer Aussparung (Freischnitt) 8 versehen, die der vom Hauptträger 3 und Radträger 4 definierten Kehle zugewandt ist. Ferner ist an der unteren Kante 7.21 des jeweiligen Schenkels 7.2 im Bereich des unteren Endes des Rückens 7.1 eine Aussparung (Freischnitt) 9 ausgebildet. Diese Aussparung 9 ermöglicht es, dass der untere Abschnitt 7.11 des Rückens 7.1 - wie in Fig. 2 deutlich gezeigt - bogenförmig ausgeführt ist und in einen unteren Kantenabschnitt 7.12 übergeht, der vorzugsweise im Wesentlichen senkrecht auf der Oberseite 3.1 des Hauptträgers 3 steht. Die Schweißnähte 10, 11 und 12 sind als Kehlnähte ausgeführt.

Auf dem Hauptträger 3 der Starrachse 1 ist unmittelbar benachbart zu dem jeweiligen Radträger 4, 4' bzw. der Verstrebung 7 ein Federsitzkörper 13 angeordnet, der der Anbindung mindestens einer Blattfeder (nicht gezeigt) dient. Der Federsitzkörper (Blattfedersitzkörper) 13 ist auf der gleichen Seite wie die Verstrebung 7, nämlich auf der Oberseite 3.1 des Hauptträgers 3 mit Abstand von der Verstrebung 7 angeordnet.

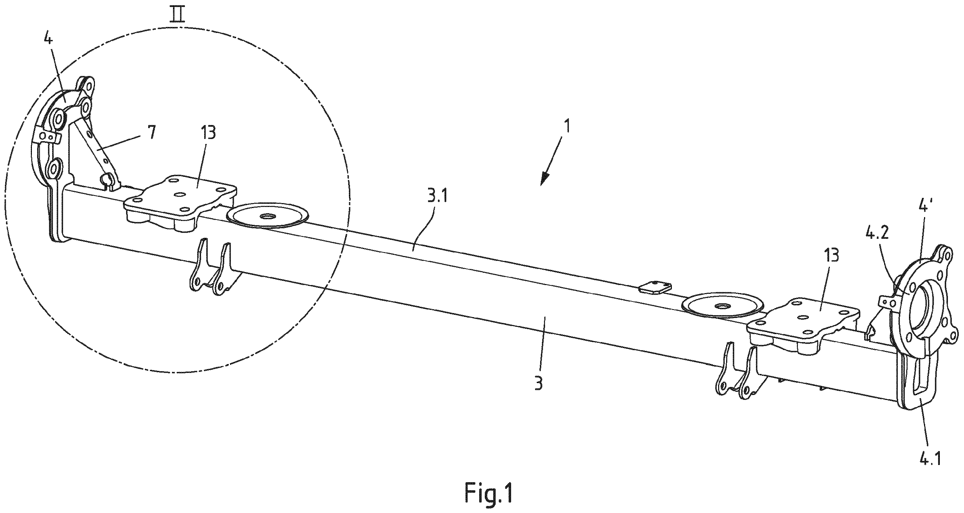

Des Weiteren ist die Starrachse 1 mit gabelförmigen Halterungen 14 zur gelenkigen Lagerung des unteren Endes von Stoßdämpfern (nicht gezeigt) und optional mit tellerförmigen Federaufnahmen (Federteller) 15 zur Lagerung von Zusatzfedern (nicht gezeigt), beispielsweise Luftfedern oder Schraubenfedern, versehen. Die Federteller 15 sind ebenfalls auf der Oberseite 3.1 des Hauptträgers 3 angeordnet. Der jeweilige Federteller 15 ist deutlich weiter von dem Radträger 4, 4' beabstandet als der nächstliegende Federsitzkörper 13 (vgl. Fig. 1). Die gabelförmigen Halterungen 14 zur gelenkigen Lagerung der Stoßdämpfer sind an der Unterseite 3.2 sowie der Rückseite 3.3 des Hauptträgers 3 angeschweißt. Sie sind entlang der Längsmittelachse des Hauptträgers 3 betrachtet zwischen dem Federsitzkörper 13 und dem Federteller 15 positioniert (vgl. Figuren 1 bis 4).

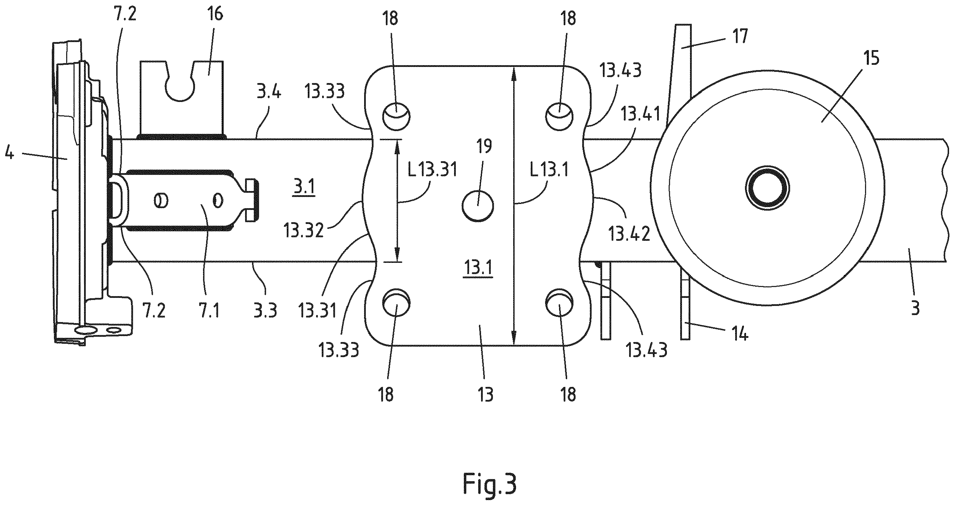

Zudem können an dem Hauptträger 3 der Starrachse Halterungen 16, 17 zur Befestigung von Bremssystemelementen (nicht gezeigt) oder anderer Fahrwerkskomponenten (nicht gezeigt) befestigt sein (vgl. Fig. 3).

Der Federsitzkörper 13 hat eine obere Federsitzfläche 13.1, eine untere Aufsitzfläche 13.2 und seitlichen Kantenflächen 13.3, 13.4, 13.5, 13.6 welche zwischen der Federsitzfläche 13.1 und der Aufsitzfläche 13.2 liegen. Des Weiteren ist der Federsitzkörper 13 mit Haltemitteln zum Halten von Spannmitteln (nicht gezeigt) zur Befestigung mindestens einer Blattfeder am Federsitzkörper 13 versehen. Die Haltemittel sind in Form von vier Durchgangslöchern 18 ausgebildet, die paarweise der Aufnahme von Spannbügeln (nicht gezeigt) dienen. Die Enden des jeweiligen Spannbügels sind in Form von Gewindestangen ausgeführt, auf die Muttern aufgeschraubt werden. Zwischen den die Spannbügel aufnehmenden Durchgangslöchern 18 ist vorzugsweise ein weiteres Durchgangsloch 19 ausgebildet. Dieses Durchgangsloch 19, das beispielsweise mittig auf der Längsmittelachse der Federsitzfläche 13.1 angeordnet ist, kann der Ausrichtung der mindestens einen Blattfeder oder einer Blattfederunterlage dienen.

Die Aufsitzfläche 13.2 des Federsitzkörpers 13 ist durch unterseitige Vorsprünge 13.21, 13.23 definiert, welche nach Art eines Rahmens eine Vertiefung oder Aussparung 13.22 an der Unterseite des Federsitzkörpers 13 begrenzen. Die unterseitigen Vorsprünge umfassen zudem stegförmige Vorsprünge 13.23, welche domförmige oder buchsenförmige Vorsprünge 13.24 verbinden. In den Vorsprüngen 13.24 sind die Durchgangslöcher 18 zur Aufnahme der Spannmittel (Spannbügel) ausgebildet. Die einander zugewandten Seiten der stegförmigen Vorsprünge 13.23 liegen im befestigten Zustand des Federsitzkörpers 13 an den parallelen Außenseiten 3.3, 3.4 des Hauptträgers 3 der Starrachse 1 an.

Die seitlichen Kantenflächen des Federsitzkörpers 13 umfassen eine erste seitliche Kantenfläche 13.3 und eine zweite seitliche Kantenfläche 13.4, die zueinander abgewandt sind und im befestigten Zustand des Federsitzkörpers 13 auf der Starrachse 1 quer zu der Starrachse 1 verlaufen. Die erste seitliche Kantenfläche 13.3 liegt im auf dem Hauptträger 3 der Starrachse 1 befestigten Zustand des Federsitzkörpers 13 näher an dem Ende der Starrachse, das dafür bestimmt und geeignet ist, ein Fahrzeugrad zu tragen, als die zweite seitliche Kantenfläche 13.4 (vgl. Fig. 3).

Die erste Kantenfläche 13.3 hat einen Kantenverlauf 13.31, der im befestigten Zustand des Federsitzkörpers 13 in Überdeckung zu der Starrachse 1 liegt. Wie insbesondere in Fig. 3 gezeigt, ist dieser Kantenverlauf 13.31 - von oben betrachtet - als nach außen vorstehender, konvexer Kantenverlauf ausgebildet, dessen Spitze oder Scheitelpunkt 13.32 in einem Bereich der ersten Kantenfläche 13.3 liegt, der entlang eines mittleren, quer zu dem Hauptträger 3 der Starrachse 1 verlaufenden Längenbereichs L13.31 der oberen Federsitzfläche 13.1 verläuft. Dieser in Fig. 3 durch einen Doppelpfeil markierte Längenbereich L13.31 beträgt beispielsweise weniger als ein Drittel, vorzugsweise weniger als ein Viertel, besonders bevorzugt weniger als ein Fünftel der ebenfalls durch einen Doppelpfeil markierten Länge L13.1 der oberen Federsitzfläche 13.1.

Die zweite seitliche Kantenfläche 13.4 des Federsitzkörpers 13 weist einen Kantenverlauf 13.41 auf, der vorzugsweise entsprechend dem Kantenverlauf 13.31 der ersten seitlichen Kantenfläche 13.3 ausgebildet ist. Wie in Fig. 3 gezeigt, können die Kantenverläufe 13.31, 13.41 der ersten Kantenfläche 13.3 und der zweiten Kantenfläche 13.4 zueinander achssymmetrisch (spiegelsymmetrisch) ausgebildet sein. Insbesondere kann die Federsitzfläche mit den Durchgangsöffnungen achssymmetrisch ausgeführt sein.

Die erste Kantenfläche 13.3 sowie die zweite Kantenfläche 13.4 des Federsitzkörpers 13 weisen entlang ihrer mit dem Hauptträger 3 der Starrachse 1 nicht in Überdeckung liegenden Abschnitte von oben betrachtet jeweils einen hohlkehlförmigen, vorzugsweise konkaven Kantenverlauf 13.33, 13.43 auf. Des Weiteren ist in den Figuren 3 und 5d zu erkennen, dass der nach außen vorstehende, vorzugsweise konvexe Kantenverlauf 13.31, 13.41 der seitlichen Kantenfläche 13.3 bzw. 13.4 nicht oder nur geringfügig, beispielsweise weniger als 10 mm, über eine Tangente T hinaus vorsteht, welche die nicht in Überdeckung mit der Starrachse 1 liegenden Abschnitte der ersten Kantenfläche 13.3 bzw. zweiten Kantenfläche 13.4 berührt.

Zumindest in dem Bereich, an welchem der jeweilige Federsitzkörper 13 mit dem Hauptträger 3 der Starrachse 1 verbunden ist, weist diese ein Querschnittsprofil auf, das vorzugsweise zwei zueinander parallele Außenseiten 3.3, 3.4, besonders bevorzugt zwei Paare zueinander paralleler Außenseiten 3.1, 3.2 und 3.3, 3.4 umfasst.

Die Federsitzkörper 13 sind als Schmiedeteile, vorzugsweise als Schmiedestahlteile ausgeführt. Sie sind stoffschlüssig mit dem Hauptträger 3 der Starrachse verbunden. Die stoffschlüssige Verbindung kann beispielsweise als Klebeverbindung verwirklicht werden. Vorzugsweise ist diese stoffschlüssige Verbindung jedoch als Schweißverbindung ausgeführt.

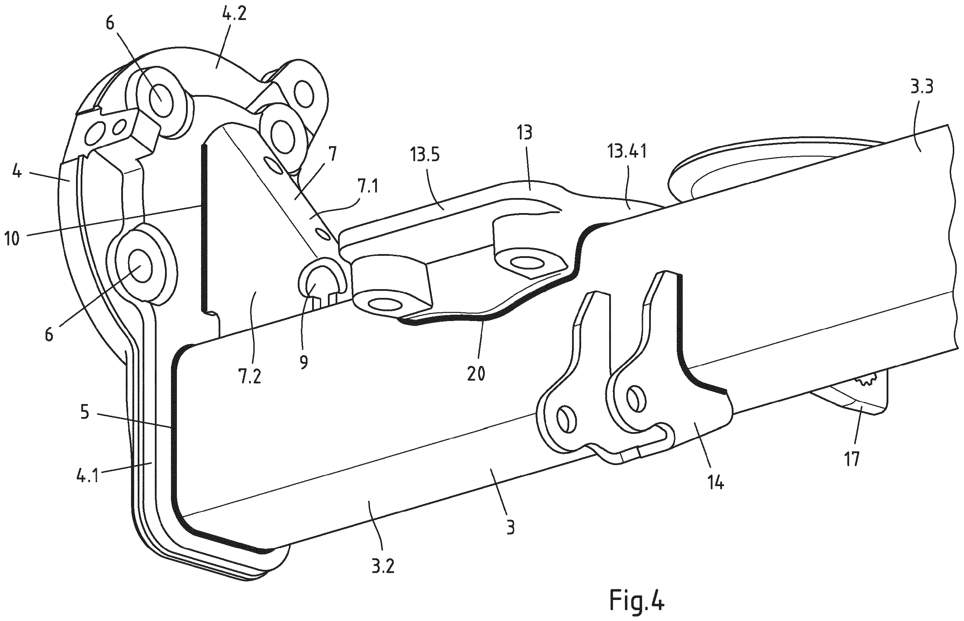

Entsprechend den Figuren 2 und 4 ist der Federsitzkörper 13 mit dem Hauptträger 3 der Starrachse 1 verschweißt, indem eine oder mehrere Schweißnähte 20, 21 zumindest teilweise entlang des nach außen vorstehenden, vorzugsweise konvexen Kantenverlaufs 13.31 der ersten Kantenfläche 13.3 und zumindest teilweise entlang des nach außen vorstehenden, vorzugsweise konvexen Kantenverlaufs 13.41 der zweiten Kantenfläche 13.4 ausgebildet sind. Die Schweißnähte 20, 21 sind als Kehlnähte ausgeführt.

In den Figuren 2 und 5a bis 5c ist zu sehen, dass in der Aufsitzfläche 13.2 des Federsitzkörpers 13 Aussparungen 22 ausgebildet sind, die an dem Kantenverlauf 13.31 der ersten Kantenfläche 13.3 und an dem Kantenverlauf 13.41 der zweiten Kantenfläche 13.4 münden. Vorzugsweise münden die Aussparungen 22 im Wesentlichen mittig an dem jeweiligen Kantenverlauf 13.31, 13.41 der ersten Kantenfläche 13.3 bzw. zweiten Kantenfläche 13.4. Die Aussparungen 22 sind in Form einer Nut, vorzugsweise einer Nut mit bogenförmigem Querschnittsprofil ausgebildet. Die Schweißnähte (Kehlnähte) 20, 21 sind an den Aussparungen 22 unterbrochen, d.h. voneinander getrennt.

Die Ausführung der Erfindung ist nicht auf die in der Zeichnung dargestellten Ausführungsbeispiele beschränkt.

## Patentansprüche

1. Starrachse (1) für ein Kraftfahrzeug, mit einem an der Starrachse (1) befestigten Federsitzkörper (13), wobei der Federsitzkörper (13) eine obere Federsitzfläche (13.1),
eine untere Aufsitzfläche (13.2),
seitliche Kantenflächen (13.3, 13.4, 13.5, 13.6), welche zwischen der Federsitzfläche (13.1) und der Aufsitzfläche (13.2) liegen, und
Haltemittel zum Halten von Spannmitteln zur Befestigung mindestens einer Feder an dem Federsitzkörper (13) aufweist,
wobei die seitlichen Kantenflächen eine erste Kantenfläche (13.3) und eine zweite Kantenfläche (13.4) umfassen, die zueinander abgewandt sind und im befestigten Zustand des Federsitzkörpers (13) auf der Starrachse (1) quer zu der Starrachse verlaufen,
wobei die erste Kantenfläche (13.3) im befestigten Zustand des Federsitzkörpers (13) auf der Starrachse näher an einem Ende der Starrachse (1), das geeignet ist, ein Fahrzeugrad zu tragen, liegt als die zweite Kantenfläche (13.4),
wobei die erste Kantenfläche (13.3) einen Kantenverlauf (13.31) aufweist, der im befestigten Zustand des Federsitzkörpers (13) auf der Starrachse (1) in Überdeckung zu der Starrachse liegt, und wobei der Federsitzkörper (13) mit der Starrachse (1) verschweißt ist,
**dadurch gekennzeichnet, dass** der Federsitzkörper (13) als Schmiedeteil ausgeführt ist, und dass besagter Kantenverlauf (13.31) von oben betrachtet zumindest teilweise als nach außen vorstehender, konvexer Kantenverlauf (13.31) ausgebildet ist, dessen Spitze oder Scheitelpunkt (13.32) in einem Bereich der ersten Kantenfläche (13.3) liegt, der entlang eines mittleren, quer zu der Starrachse verlaufenden Längenbereichs (L13.31) der oberen Federsitzfläche (13.1) verläuft, wobei besagter mittlerer Längenbereich (L13.31) weniger als ein Drittel, vorzugsweise weniger als ein Viertel, besonders bevorzugt weniger als ein Fünftel der Länge (L13.1) der oberen Federsitzfläche (13.1) beträgt, und wobei der Federsitzkörper (13) mit der Starrachse (1) verschweißt ist, indem eine oder mehrere Schweißnähte (20, 21) zumindest teilweise entlang des nach außen vorstehenden, konvexen Kantenverlaufs (13.31) der ersten Kantenfläche (13.3) ausgebildet ist/sind.

2. Starrachse nach Anspruch 1, **dadurch gekennzeichnet, dass** die zweite Kantenfläche (13.4) einen Kantenverlauf (13.41) aufweist, der im befestigten Zustand des Federsitzkörpers (13) auf der Starrachse (1) in Überdeckung zu der Starrachse liegt, wobei dieser Kantenverlauf (13.41) der zweiten Kantenfläche (13.4) von oben betrachtet zumindest teilweise als nach außen vorstehender, vorzugsweise konvexer Kantenverlauf (13.41) ausgebildet ist, dessen Spitze oder Scheitelpunkt (13.42) in einem Bereich der zweiten Kantenfläche (13.4) liegt, der entlang eines mittleren, quer zu der Starrachse (1) verlaufenden Längenbereichs (L13.31) der oberen Federsitzfläche (13.1) verläuft, wobei besagter mittlerer Längenbereich (L13.31) weniger als ein Drittel, vorzugsweise weniger als ein Viertel, besonders bevorzugt weniger als ein Fünftel der Länge (L13.1) der oberen Federsitzfläche (13.1) beträgt, und wobei der Federsitzkörper (13) mit der Starrachse (1) verschweißt ist, indem eine oder mehrere Schweißnähte (20, 21) zumindest teilweise entlang des nach außen vorstehenden, vorzugsweise konvexen Kantenverlaufs (13.41) der zweiten Kantenfläche (13.4) ausgebildet ist/sind.

3. Starrachse nach Anspruch 1 oder 2, **dadurch gekennzeichnet, dass** der Federsitzkörper (13) als Schmiedestahlteil ausgeführt ist.

4. Starrachse nach einem der Ansprüche 1 bis 3, **dadurch gekennzeichnet, dass** die erste Kantenfläche (13.3) und/oder die zweite Kantenfläche (13.4) entlang ihrer mit der Starrachse (1) nicht in Überdeckung liegenden Abschnitte von oben betrachtet jeweils einen hohlkehlförmigen, vorzugsweise konkaven Kantenverlauf (13.33, 13.43) aufweist/aufweisen.

5. Starrachse nach einem der Ansprüche 1 bis 4, **dadurch gekennzeichnet, dass** der nach außen vorstehende, konvexe Kantenverlauf (13.31, 13.41) nicht oder nicht mehr als 10 mm über eine Tangente (T) hinaus vorsteht, welche die nicht in Überdeckung mit der Starrachse (1) liegenden Abschnitte der ersten Kantenfläche (13.3) oder zweiten Kantenfläche (13.4) berührt.

6. Starrachse nach einem der Ansprüche 1 bis 5, **dadurch gekennzeichnet, dass** in der Aufsitzfläche (13.2) mindestens eine Aussparung (22) ausgebildet ist, die an dem besagten Kantenverlauf (13.31) der ersten Kantenfläche (13.3) mündet, vorzugsweise im Wesentlichen mittig an dem besagten Kantenverlauf (13.31) der ersten Kantenfläche (13.3) mündet.

7. Starrachse nach einem der Ansprüche 1 bis 6, **dadurch gekennzeichnet, dass** die Federsitzfläche (13.1) und die Haltemittel zum Halten von Spannmitteln zur Befestigung mindestens einer Blattfeder ausgebildet sind.

8. Starrachse nach einem der Ansprüche 1 bis 7, **dadurch gekennzeichnet, dass** die Starrachse (1) eine abgeflachte oder im Wesentlichen ebene Verbindungsfläche oder Außenseite (3.1) aufweist, an welcher der Federsitzkörper (13) mit der Starrachse (1) verbunden ist.

9. Starrachse nach einem der Ansprüche 1 bis 8, **dadurch gekennzeichnet, dass** die Starrachse (1) in ihrem Bereich, an welchem der Federsitzkörper (13) mit der Starrachse (1) verbunden ist, ein Querschnittsprofil aufweist, das mindestens zwei zueinander parallele Außenseiten (3.3, 3.4), vorzugsweise zwei Paare zueinander paralleler Außenseiten (3.1, 3.2; 3.3, 3.4), umfasst.

10. Starrachse nach einem der Ansprüche 1 bis 9, **dadurch gekennzeichnet, dass** die Starrachse (1) als nicht angetriebene Starrachse ausgeführt ist, wobei die Starrachse (1) vorzugsweise aus einem Achsrohr gebildet ist.

11. Starrachse nach einem der Ansprüche 1 bis 10, **dadurch gekennzeichnet, dass** an den Enden der Starrachse (1) Radträger (4, 4') befestigt sind, die jeweils mittels einer Verstrebung (7), vorzugsweise einer im Wesentlichen dreieckigen Hohlkörperstrebe, an der Starrachse (1) abgestützt sind, wobei die Verstrebung (7) auf der gleichen Seite wie der jeweilige Federsitzkörper (13) auf der Starrachse (1) mit Abstand von dem Federsitzkörper (13) angeordnet ist.

12. Starrachse nach Anspruch 11, **dadurch gekennzeichnet, dass** die Verstrebung (7) mit dem jeweiligen Radträger (4, 4') und einem axialen Hauptträger (3) der Starrachse (1) verschweißt ist.

## Claims

1. Rigid axle (1) for a motor vehicle, having a spring seat body (13) fastened to the rigid axle (1), the spring seat body (13) having an upper spring seat surface (13.1),
a lower seat surface (13.2),
lateral edge surfaces (13.3, 13.4, 13.5, 13.6) located between the spring seat surface (13.1) and the seat surface (13.2), and
holding means for holding tensioning means for fastening at least one spring to the spring seat body (13),
wherein the lateral edge surfaces comprise a first edge surface (13.3) and a second edge surface (13.4) which face away from each other and extend transversely to the rigid axle (1) when the spring seat body (13) is fastened on the rigid axle (1),
wherein the first edge surface (13.3), in the fastened state of the spring seat body (13) on the rigid axle, lies closer to an end of the rigid axle (1), which is suitable for supporting a vehicle wheel, than the second edge surface (13.4),
the first edge surface (13.3) having an edge course (13.31) which, in the fastened state of the spring seat body (13) on the rigid axle (1), lies in overlap with the rigid axle, and the spring seat body (13) being welded to the rigid axle (1), **characterized in that** the spring seat body (13) is carried-out as a forged part, and **in that** said edge course (13.31), viewed from above, is formed at least partially as an outwardly projecting, convex edge course (13.31) whose apex or vertex (13.32) lies in a region of the first edge surface (13.3) which runs along a central length range (L13.31) of the upper spring seat surface (13.1) extending transversely to the rigid axle, wherein said central length range (L13.31) is less than one third, preferably less than one quarter, particularly preferably less than one fifth of the length (L13.1) of the upper spring seating surface (13.1), and wherein the spring seat body (13) is welded to the rigid axle (1) **in that** one or more weld seams (20, 21) is/are formed at least partially along the outwardly projecting, convex edge course (13.31) of the first edge surface (13.3).

2. Rigid axle according to claim 1, **characterized in that** the second edge surface (13.4) has an edge course (13.41) which, in the fastened state of the spring seat body (13) on the rigid axle (1), lies in overlap with the rigid axle, this edge course (13.41) of the second edge surface (13. 4) viewed from above is formed at least partially as an outwardly projecting, preferably convex edge course (13.41), the apex or vertex (13.42) of which lies in a region of the second edge surface (13.4) which extends along a central length range (L13. 31) of the upper spring seat surface (13.1) extending transversely to the rigid axle (1), wherein said central length region (L13.31) is less than one third, preferably less than one quarter, particularly preferably less than one fifth of the length (L13.1) of the upper spring seat surface (13. 1), and wherein the spring seat body (13) is welded to the rigid axle (1) **in that** one or more weld seams (20, 21) is/are formed at least partially along the outwardly projecting, preferably convex edge course (13.41) of the second edge surface (13.4).

3. Rigid axle according to claim 1 or 2, **characterized in that** the spring seat body (13) is carried-out as a forged steel part.

4. Rigid axle according to any one of claims 1 to 3, **characterized in that** the first edge surface (13.3) and/or the second edge surface (13.4) each has/have a fillet-shaped, preferably concave edge course (13.33, 13.43) along its sections that do not overlap with the rigid axle (1) when viewed from above.

5. Rigid axle according to any one of claims 1 to 4, **characterized in that** the outwardly projecting, convex edge course (13.31, 13.41) does not project or does not project more than 10 mm beyond a tangent (T) which touches the sections of the first edge surface (13.3) or second edge surface (13.4) which are not in overlap with the rigid axle (1).

6. Rigid axle according to any one of claims 1 to 5, **characterized in that** at least one recess (22) is formed in the seat surface (13.2), which recess opens out at the said edge course (13.31) of the first edge surface (13.3), preferably opens out substantially centrally at the said edge course (13.31) of the first edge surface (13.3).

7. Rigid axle according to any one of claims 1 to 6, **characterized in that** the spring seat surface (13.1) and the holding means are designed to hold tensioning means for fastening at least one leaf spring.

8. Rigid axle according to any one of claims 1 to 7, **characterized in that** the rigid axle (1) has a flattened or substantially flat connecting surface or outer side (3.1), at which the spring seat body (13) is connected to the rigid axle (1).

9. Rigid axle according to any one of claims 1 to 8, **characterized in that** the rigid axle (1) has, in its region at which the spring seat body (13) is connected to the rigid axle (1), a cross-sectional profile which comprises at least two mutually parallel outer sides (3.3, 3.4), preferably two pairs of mutually parallel outer sides (3.1, 3.2; 3.3, 3.4).

10. Rigid axle according to any one of claims 1 to 9, **characterized in that** the rigid axle (1) is designed as a non-driven rigid axle, the rigid axle (1) preferably being formed from an axle tube.

11. Rigid axle according to any one of claims 1 to 10, **characterized in that** wheel carriers (4, 4') are attached to the ends of the rigid axle (1), each wheel carrier being supported on the rigid axle (1) by means of a strut (7), preferably a substantially triangular hollow body strut, the strut (7) being arranged on the same side as the respective spring seat body (13) on the rigid axle (1) at a distance from the spring seat body (13).

12. Rigid axle according to claim 11, **characterized in that** the strut (7) is welded to the respective wheel carrier (4, 4') and an axial main carrier (3) of the rigid axle (1).

## Revendications

1. Essieu rigide (1) pour un véhicule automobile, avec un corps de siège de ressort (13) fixé à l'essieu rigide (1), dans lequel le corps de siège de ressort (13) présente
une surface de siège de ressort (13.1) supérieure,
une surface de monte (13.2) inférieure,
des surfaces de bord (13.3, 13.4, 13.5, 13.6) latérales qui se trouvent entre la surface de siège de ressort (13.1) et la surface de monte (13.2), et
des moyens de retenue permettant de retenir des moyens de serrage permettant de fixer au moins un ressort au corps de siège de ressort (13),
dans lequel les surfaces de bord latérales comprennent une première surface de bord (13.3) et une seconde surface de bord (13.4) détournées l'une de l'autre et qui, à l'état fixé du corps de siège de ressort (13) sur l'essieu rigide (1), s'étendent transversalement par rapport à l'essieu rigide,
dans lequel la première surface de bord (13.3), à l'état fixé du corps de siège de ressort (13) sur l'essieu rigide, est plus proche d'une extrémité de l'essieu rigide (1) convenant pour supporter une roue de véhicule que ne l'est la seconde surface de bord (13.4),
dans lequel la première surface de bord (13.3) présente un tracé de bord (13.31) qui, à l'état fixé du corps de siège de ressort (13) sur l'essieu rigide (1), se situe en chevauchement par rapport à l'essieu rigide, et dans lequel le corps de siège de ressort (13) est soudé à l'essieu rigide (1),
**caractérisé en ce que** le corps de siège de ressort (13) est réalisé sous la forme d'une pièce forgée et **en ce que** ledit tracé de bord (13.31), vu de dessus, est réalisé au moins en partie sous la forme d'un tracé de bord convexe (13.31) faisant saillie vers l'extérieur et dont la pointe ou le point sommital (13.32) se situe dans une région de la première surface de bord (13.3) qui s'étend le long d'une région longitudinale médiane (L13.31), s'étendant transversalement par rapport à l'essieu rigide, de la surface de siège de ressort (13.1) supérieure, dans lequel ladite région longitudinale médiane (L13.31) est inférieure à un tiers, de manière préférée inférieure à un quart, de manière particulièrement préférée inférieure à un cinquième, de la longueur (L13.1) de la surface de siège de ressort (13.1) supérieure, et dans lequel le corps de siège de ressort (13) est soudé à l'essieu rigide (1) en formant un ou plusieurs cordon(s) de soudure (20, 21) au moins en partie le long du tracé de bord convexe (13.31), faisant saillie vers l'extérieur, de la première surface de bord (13.3).

2. Essieu rigide selon la revendication 1, **caractérisé en ce que** la seconde surface de bord (13.4) présente un tracé de bord (13.41) qui, à l'état fixé du corps de siège de ressort (13) sur l'essieu rigide (1), se situe en chevauchement par rapport à l'essieu rigide, dans lequel ledit tracé de bord (13.41) de la seconde surface de bord (13.4), vu de dessus, est réalisé au moins en partie sous la forme d'un tracé de bord (13.41), de manière préférée convexe, faisant saillie vers l'extérieur et dont la pointe ou le point sommital (13.42) se situe dans une région de la seconde surface de bord (13.4) qui s'étend le long d'une région longitudinale médiane (L13.31), s'étendant transversalement par rapport à l'essieu rigide (1), de la surface de siège de ressort (13.1) supérieure, dans lequel ladite région longitudinale médiane (L13.31) est inférieure à un tiers, de manière préférée inférieure à un quart, de manière particulièrement préférée inférieure à un cinquième, de la longueur (L13.1) de la surface de siège de ressort (13.1) supérieure, et dans lequel le corps de siège de ressort (13) est soudé à l'essieu rigide (1) en formant un ou plusieurs cordon(s) de soudure (20, 21) au moins en partie le long du tracé de bord (13.41), de manière préférée convexe, faisant saillie vers l'extérieur, de la seconde surface de bord (13.4).

3. Essieu rigide selon la revendication 1 ou 2, **caractérisé en ce que** le corps de siège de ressort (13) est réalisé sous la forme d'une pièce en acier forgée.

4. Essieu rigide selon l'une quelconque des revendications 1 à 3, **caractérisé en ce que** la première surface de bord (13.3) et/ou la seconde surface de bord (13.4) présente(nt), vu de dessus et le long de leurs sections ne situant pas en chevauchement par rapport à l'essieu rigide (1), respectivement un tracé de bord (13.33, 13.43), de manière préférée concave, en forme de gorge.

5. Essieu rigide selon l'une quelconque des revendications 1 à 4, **caractérisé en ce que** le tracé de bord convexe (13.31, 13.41) faisant saillie vers l'extérieur ne fait pas saillie, ou ne fait pas saillie de plus de 10 mm, au-delà d'une tangente (T) touchant les sections de la première surface de bord (13.3) ou de la seconde surface de bord (13.4) qui ne se situent pas en chevauchement par rapport à l'essieu rigide (1).

6. Essieu rigide selon l'une quelconque des revendications 1 à 5, **caractérisé en ce qu'**au moins un évidement (22) débouchant sur ledit tracé de bord (13.31) de la première surface de bord (13.3), de manière préférée débouchant essentiellement au milieu dudit tracé de bord (13.31) de la première surface de bord (13.3), est réalisé dans la surface de monte (13.2).

7. Essieu rigide selon l'une quelconque des revendications 1 à 6, **caractérisé en ce que** la surface de siège de ressort (13.1) et les moyens de retenue permettant de retenir des moyens de serrage sont réalisés afin de fixer au moins un ressort à lame.

8. Essieu rigide selon l'une quelconque des revendications 1 à 7, **caractérisé en ce que** l'essieu rigide (1) présente une surface de liaison ou une face extérieure (3.1) aplatie ou essentiellement plane au niveau de laquelle le corps de siège de ressort (13) est relié à l'essieu rigide (1).

9. Essieu rigide selon l'une quelconque des revendications 1 à 8, **caractérisé en ce que** l'essieu rigide (1) présente, dans sa région au niveau de laquelle le corps de siège de ressort (13) est relié à l'essieu rigide (1), un profil de section transversale qui comprend au moins deux faces extérieures (3.3, 3.4) parallèles l'une à l'autre, de manière préférée deux paires de faces extérieures (3.1, 3.2 ; 3.3, 3.4) parallèles l'une à l'autre.

10. Essieu rigide selon l'une quelconque des revendications 1 à 9, **caractérisé en ce que** l'essieu rigide (1) est réalisé sous la forme d'un essieu rigide non entraîné, dans lequel l'essieu rigide (1) est de manière préférée constitué d'un tube d'essieu

11. Essieu rigide selon l'une quelconque des revendications 1 à 10, **caractérisé en ce qu'**aux extrémités de l'essieu rigide (1) sont fixés des supports de roue (4, 4') respectivement soutenus au niveau de l'essieu rigide (1) au moyen d'un chevalement (7), de manière préférée au moyen d'une jambe de force à corps creux essentiellement triangulaire, dans lequel le chevalement (7) est agencé du même côté que le corps de siège de ressort (13) respectif sur l'essieu rigide (1) à une certaine distance du corps de siège de ressort (13).

12. Essieu rigide selon la revendication 11, **caractérisé en ce que** le chevalement (7) est soudé au support de roue (4, 4') respectif et à un support principal axial (3) de l'essieu rigide (1).
